# FASCICULE DE BREVET EUROPEEN

(11) **EP 0 459 911 B1**
(45) Date de publication et mention de la délivrance du brevet: **20.12.1995**
(21) Numéro de dépôt: 91401417.0
(22) Date de dépôt: 30.05.1991
(51) Int. Cl.: H04J 3/06

(54) **Procédé pour réduire la composante basse-fréquence de la gigue dans un système de transmission de données numériques**
Verfahren zum Vermindern von Niederfrequenz-Zitterkomponenten in einem digitalen Daten-Übertragungssystem
Procedure of reducing the low frequency component of the jitter in a digital transmission system

(30) Priorité: 01.06.1990 FR 9006885
(43) Date de publication de la demande: 04.12.1991
(73) Titulaire: TELEDIFFUSION DE FRANCE, 75932 Paris Cédex 15 (FR)
(72) Inventeur: Weisser, Alain, F-92140 Clamart (FR)
(74) Mandataire: Keib, Gérard

(56) Documents cités:
- DE-A- 3 207 989
- US-A- 4 133 981

## Description

Le domaine de l'invention est celui des systèmes de transmission de données numériques asynchrones. Plus particulièrement, l'invention se rapporte à un procédé pour réduire la composante basse-fréquence de la gigue dans un signal de rythme reconstitué en sortie d'un système de transmission de données numérique du type comprenant à son entrée, un multiplexeur d'ordre supérieur recevant au moins un flot de données numérisées organisées en blocs et présentées à un rythme déterminé, ledit multiplexeur émettant chaque bloc de données dans un multiplex numérique vers la sortie du système de transmission via un canal de transmission après un retard de multiplexage variable.

Il est connu qu'un système de transmission de données numérique comportant un équipement de multiplexage numérique d'ordre supérieur crée de la gigue dans le signal de rythme reconstitué en sortie du système de transmission. Un tel système de transmission permet le passage entre différents ordres hiérarchiques normalisés ou non pour attaquer les supports de transmission diverses par un signal numérique multiplex ayant des caractéristiques spécifiques (débit, niveau, forme du signal, ...). Les flots de données en pratique asynchrones arrivant en parallèle sur l'équipement de multiplexage sont reçus dans des moyens de mémorisation de l'équipement de multiplexage pour gérer leur asynchronisme. Le multiplex numérique fabriqué à partir des données mémorisées est transmis à des instants périodiques successifs au rythme de sortie de l'équipement de multiplexage. En sortie du système de transmission, le multiplex numérique est décodé par un moyen de décodage des données du multiplex tel qu'un démultiplexeur, ce moyen de décodage constituant un signal de rythme pour extraire les données du multiplex en observant les instants d'apparition des données. On observe un gigue dans le signal de rythme reconstitué en sortie du système de transmission, cette gigue étant due aux fluctuations du retard de multiplexage dépendant des relations de phases entre les instants d'arrivée des données en entrée du multiplexeur, et les opportunités d'émission desdites données dans le multiplex. En outre, la gigue dans le signal reconstitué, est d'autant plus importante que le multiplexage est réalisé sur des blocs de données (multiplexage paquet) plutôt que sur des unités binaires (multiplexage bit à bit). En prenant le cas d'un multiplexeur paquet dans lequel le rythme d'entrée des paquets est proche d'un sous-multiple de leur rythme de sortie dans le multiplex, la phase entre les instants d'arrivée des paquets et les instants d'émission des paquets glisse à long terme du fait du rapport de rythme défavorable ce qui engendre dans le signal de rythme reconstitué un ou plusieurs sauts de phase. Cette composante basse fréquence de la gigue est source d'erreurs dans le décodage des données du multiplex tel qu'un aiguillage erroné des données démultiplexées.

De façon connue, pour réduire la gigue, les rythmes relatifs des affluents en entrée d'un multiplexeur d'ordre supérieur et le rythme du signal multiplex en sortie du multiplexeur sont choisis avec un rapport entre eux suffisamment complexe pour obtenir des battements de phase à fréquence élevée susceptibles d'être plus faciles à filtrer. A titre d'exemple, la norme G. 742 du CCITT définit la méthode de multiplexage de 4 voies à 2048 Kbits par seconde dans un multiplex à 8448 Kbits par seconde. Ce multiplex utilise une trame de 848 bits répétée toutes les 100,38 Microsecondes environ. Cependant, de tels rapports compliquent le système de transmission en lui imposant des contraintes de fonctionnement et limitent sa souplesse d'utilisation.

On a aussi cherché à réduire la gigue en augmentant l'efficacité du filtrage du signal de rythme reconstitué au moyen de boucle à verrouillage de phase. Cependant, de telles techniques augmentent le temps de synchronisation des systèmes de transmission du fait que le temps de synchronisation est lié à la constante de temps de la boucle.

On connaît enfin des procédures d'utilisation des signaux tolérant un niveau de gigue élevé, ces procédures venant compléter les techniques de réduction de la gigue dans les systèmes de transmission de données numériques cités précédemment. Cependant, celles-ci sont extrêmement complexes et peu fiables. Par ailleurs, la composante basse fréquence de la gigue reste toujours présente.

On connait d'après le brevet US-A-4 133 981 (Lynden U. Kibler) un procédé consistant à introduire des retards de multiplexage sur les entrées d'un multiplexeur. Cependant, on ne tient pas compte des écarts de multiplexage pour les émissions précédentes.

En conséquence, l'object de la présente invention vise à pallier aux inconvénients de la technique décrits ci-dessus.

Au contraire, des techniques connues exposées ci-dessus, l'invention part du fait qu'il est préférable de chercher à réduire la gigue dans le signal de rythme reconstitué en contrôlant le processus générateur de gigue, c'est à dire le multiplexeur d'ordre supérieur. Ce contrôle consiste à forcer le multiplexeur à introduire un retard de multiplexage approprié de manière que les variations de retard de multiplexage se compensent et que le retard de multiplexage moyen devienne constant à long terme. Le retard de multiplexage étant constant à long terme, on élimine la composante basse fréquence de la gigue dans le signal reconstitué en sortie du système de transmission. La mise en oeuvre de ce procédé est simple et peu coûteux.

A cet effet, l'invention concerne un procédé pour réduire la composante basse fréquence de la gigue dans un signal de rythme reconstitué en sortie d'un système de transmission de données numérique du type comprenant à son entrée un multiplexeur d'ordre supérieur (15) recevant au moins un flot de données numérisées organisées en bloc et présentées à un rythme déterminé, ledit multiplexeur émettant chaque bloc de données dans un multiplex numérique vers la sortie du système de transmission via un canal de transmission (17) de données numérisées après un retard de multiplexage variable, caractérisé en ce que :
a) on mesure un retard de multiplexage pour l'émission en cours d'un bloc de données dans le multiplex,
b) on compare le retard de multiplexage mesuré avec une valeur de référence choisie pour déterminer un écart de retard de multiplexage et pour différer si nécessaire ladite émission en cours,
c) on répète les étapes a) et b) pour l'émission suivante d'un bloc de données dans le multiplex en prenant en compte dans l'étape b), les écarts de multiplexage déterminés pour les émissions précédentes ; ladite prise en compte des écarts de multiplexage déterminés pour les émissions précédentes consistant à cumuler successivement lesdits écarts de multiplexage et à introduire le résultat du cumul lors de la comparaison du retard de multiplexage avec ladite valeur de référence ; de manière à ce que les variations de retard de multiplexage se compensent et à ce que le retard de multiplexage moyen deviennent constant à long terme.

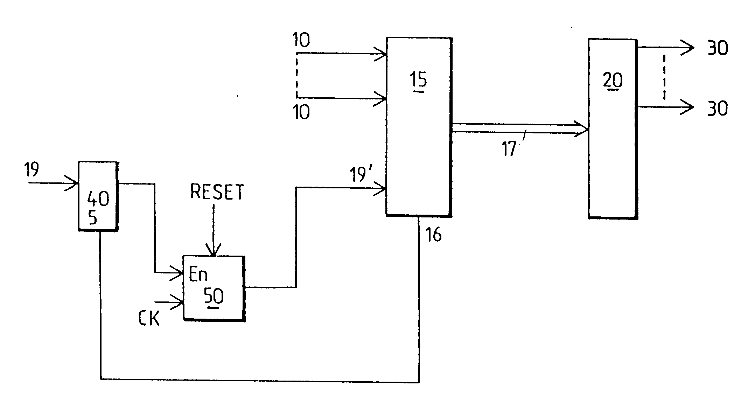

D'autres caractéristiques et avantages de l'invention apparaîtront encore mieux à la lecture de la description qui suit et de la figure annexée qui représente sous forme schématique un dispositif pour la mesure et le contrôle du retard de multiplexage d'un multiplexeur d'ordre supérieur.

En se reportant à cette figure, on a représenté un multiplexeur d'ordre supérieur 15 formant l'entrée d'un système de transmission de données numérique. Le multiplexeur 15 reçoit, sur une pluralité d'entrées 10, des flots de données numérisées organisées en blocs provenant d'affluents divers pour les restituer en sortie dans un multiplex numérique sur un canal de transmission 17. Le canal de transmission 17 est relié à la sortie du système de transmission à un dispositif de décodage du multiplex tel qu'un démultiplexeur 20. Le démultiplexeur 20, en observant les instants d'arrivée des blocs de données multiplexés, reconstitue un signal de rythme pour le décodage des données numérisées à délivrer sur une pluralité de voies 30 comme cela est bien connu de l'homme de l'art. Il faut comprendre ici que les blocs de données reçus en entrée du multiplexeur 15 peuvent être des éléments binaires, des octets ou des paquets d'éléments binaires de longueurs variables. Bien entendu, le multiplexage des données numérisées peut être un multiplexage bit à bit ou un multiplexage paquet sans pour cela sortir du cadre de l'invention.

Le multiplexeur 15 comporte en plus des voies d'entrée 10 des données numérisées à multiplexer, une entrée 19 pour recevoir un signal indiquant la disponibilité d'un bloc de données sur une des voies d'entrée 10. Le multiplexeur 15 comporte en outre, en plus de la sortie du multiplex numérique reliée au canal de transmission 17, une sortie 16 pour transmettre un signal indiquant que le bloc de données présenté sur une entrée 10 du multiplexeur a été émis dans le multiplex. Dans un but de clarté de l'exposé de l'invention, nous ferons uniquement référence par la suite à une seule voie d'entrée 10 du fait que le procédé selon l'invention sera de préférence appliqué identiquement pour chaque voie d'entrée du multiplexeur 15. On devra comprendre aussi que les signaux correspondant à la disponibilité d'un bloc de données en entrée du multiplexeur et à l'acquittement d'émission d'un bloc de données dans le multiplex, sont des signaux internes au multiplexeur 15. Ils sont donc représentés comme extérieurs au bloc de multiplexage dans un but de clarté de l'exposé.

Selon l'invention, on contrôle les instants d'émission du multiplexeur 15 en fonction des variations de retard de multiplexage pour obtenir un retard de multiplexage moyen constant à long terme de façon à éliminer la composante basse fréquence de la gigue dans la signal de rythme reconstitué par le démultiplexeur 20. Dans un système de transmission conforme à l'art antérieur, le signal correspondant à la disponibilité d'un bloc de données en entrée du multiplexeur, a pour fonction de commander au multiplexeur 15 l'émission du bloc de données dans le multiplex à la première opportunité d'émission du multiplex. Selon l'invention, ce signal de présence d'un bloc de données sur une entrée 10 du multiplexeur 15 (référencé ci-après signal 19) est envoyé sur une entrée d'un circuit de mesure du temps de multiplexage recevant sur une deuxième entrée le signal d'acquittement d'émission du bloc de données dans le multiplex (référencé ci-après signal 16). Ce circuit mesure de fait un temps correspondant à un retard de multiplexage variable pour chaque émission d'un bloc de données dans le multiplex et filtre la composante basse fréquence des variations du retard pour différer, si nécessaire, l'émission du bloc de données en cours en envoyant avec un retard le signal de présence d'un bloc 19. Le signal correspond au signal 19′ sur la figure. Le filtrage consiste à déterminer à chaque émission de bloc un écart de retard de multiplexage résultant de la comparaison entre le retard de multiplexage mesuré et une valeur de référence choisie en prenant en compte lors de la comparaison, les écarts de retard de multiplexage antérieurs.

Le circuit de mesure du retard de multiplexage pour une mesure numérique de ce retard, comprend une bascule 40 qui reçoit, sur deux entrées les signaux 19, 16, respectivement de présence d'un bloc de données en entrée du multiplexeur 15 et d'acquittement d'émission du bloc de données dans le multiplex pour fournir un signal de début et de fin de comptage, un circuit de comptage 50, tel qu'un compteur binaire, qui reçoit, sur une entrée de validation du comptage ledit signal de début et de fin de comptage mis en forme par la bascule 40 pour fournir le signal retardé 19′ commandant le multiplexeur 15 pour l'émission d'un bloc de données dans le multiplex lorsqu'une valeur de comptage prédéterminée est atteinte. On comprendra que le signal 19′ est équivalent au signal 19 sauf que l'information de commande qu'il transporte est retardée par le circuit de mesure qui sera décrit ci-après.

Nous allons maintenant décrire le fonctionnement du dispositif de mesure pour la mise en oeuvre du procédé selon l'invention. Lorsqu'un bloc de données est présenté en entrée du multiplexeur 15 sur la voie 10, le signal 19 arme la bascule 40. La bascule 40 délivre à l'entrée En du compteur 50 un signal de début de comptage. Le compteur 50 est par ailleurs initialisé au début de la transmission par une ligne RESET et commence le comptage au rythme d'une horloge CK dont la fréquence Fo est choisie suffisamment grande par rapport au rythme d'envoi des blocs de données dans le multiplex. Lorsque le compteur 50 a compté un nombre prédéterminé de coups d'horloge, il fournit le signal 19′ au multiplexeur 15 pour commander l'émission du bloc de données dans le multiplex à la première opportunité suivante. On comprendra que le nombre prédéterminé de coups d'horloge peut correspondre par exemple à la valeur maximale de comptage du compteur 50 et que le signal 19′ correspond à un signal de débordement du compteur comme cela peut être compris de l'homme de l'art. En connaissant la fréquence Fo de l'horloge CK, on peut facilement déterminer un nombre No de coups d'horloge pour le compteur 50 de manière que le débordement du compteur 50 intervienne après une valeur de référence de temps correspondant sensiblement à une valeur de retard de multiplexage prédéterminée. Après débordement du compteur 50, celui-ci continue le comptage à la cadence de l'horloge CK depuis un état d'auto-initialisation jusqu'à ce que le multiplexeur 15 délivre le signal 16 d'acquittement d'émission du bloc de données dans le multiplex. Lorsque le signal 16 est appliqué à l'entrée de la bascule 40, celle-ci délivre sur l'entrée En du compteur un signal de fin de comptage inhibant le compteur 50. La commande pour l'émission d'un bloc de données dans le multiplex est donc retardée pour le premier bloc de données d'un retard R₀ égal à N₀/F₀. Lorsque le signal 16 d'acquittement d'émission du bloc de données dans le multiplex interrompt le comptage du compteur 50, le contenu du compteur 50 représente l'écart t₁ entre le retard de transmission du premier bloc de données et la valeur R₀ du fait que l'instant d'émission d'un bloc de données par le multiplexeur ne suit pas toujours immédiatement l'instant où le compteur 50 déborde.

Du fait de cette construction simple du circuit de mesure, le résultat de la comparaison du retard de multiplexage avec la valeur de référence est directement donné par le signal de débordement en sortie du compteur 50, ce qui implique que la valeur de référence choisie détermine la capacité de comptage du compteur 50. Par ailleurs, l'auto-initialisation du compteur 50, lors de son débordement, correspond à la soustraction de la valeur de référence à la valeur de retard de multiplexage mesuré.

Bien entendu, on pourra prévoir des montages équivalents où la comparaison et la soustraction sont réalisées par un circuit comparateur ou analogue relié convenablement au compteur 50 pour comparer, à chaque coup d'horloge, le contenu du compteur 50 avec une valeur de référence appliquée à une seconde entrée du comparateur et un circuit sous tracteur différenciant le nombre total de coups d'horloge mesuré par le compteur 50 avec un nombre de coups d'horloge correspondant à une valeur de référence prédéterminée comme cela est bien connu de l'homme du métier. Lorsque le comparateur détecte que le contenu du compteur 50 est supérieur ou égal à la valeur de référence choisie, il émet le signal 19′ signalant au multiplexeur 15 la présence d'un bloc de données sur une voie d'entrée 10.

Dès qu'un second bloc de données est présenté sur la voie 10 en entrée du multiplexeur 15, le signal 19, active le compteur 50 via la bascule 40. A la différence du cycle précédent, le compteur 50 commence le comptage à partir de la valeur de comptage correspondant à l'écart t₁. Le débordement du compteur 50 intervient au bout d'un temps R0 - t₁, celui-ci délivrant à cet instant le signal 19′ pour la commande de l'émission du bloc de données dans le multiplex. La commande d'émission du multiplexeur 15 est donc anticipée pour tenir compte du retard engendré lors de l'émission précédente d'un bloc de données. Dès que le bloc de données est émis dans le multiplex par le multiplexeur 15, ce dernier délivre le signal 16 d'acquittement d'émission qui bloque le comptage du compteur 50 via la bascule 40 comme cela a déjà été décrit précédemment. La valeur de comptage résiduelle dans le compteur 50 à ce moment correspond à un nouvel écart de retard de multiplexage t₂ qui sera reporté à nouveau au cycle suivant et ainsi de suite. On cumule de cette manière de cycle en cycle les écarts de retard de multiplexage t par reports successifs d'un écart de retard de multiplexage d'une émission de blocs dans le retard de multiplexage mesuré de l'émission de blocs suivant.

A la présentation du énième bloc de données sur la voie 10 d'entrée du multiplexeur 15, la bascule 40 est armée pour la énième fois et le nombre d'impulsions comptées par le compteur 50 est égal à n x N₀. Lorsque le multiplexeur 15 émet le énième bloc de données dans le multiplex numérique, la somme des retards de multiplexage mesurés par le compteur 50 est comprise entre n x R₀ et n x R₀ + t où t représente l'écart maximal de retard de multiplexage. Par conséquent, les variations de retard de multiplexage relatives à chaque émission de bloc de données dans le multiplex se compensent à long terme et le retard moyen de multiplexage tend vers une valeur constante égale à R₀.

De préférence, on choisira une valeur de référence de retard de multiplexage R₀ supérieure à la valeur de retard de multiplage maximale pour obtenir une totale compensation des écarts de retard de multiplexage.

On notera que le dispositif de réduction de la composante basse fréquence de la gigue dans le signal de rythme reconstitué pour la mise en oeuvre du procédé selon l'invention est essentiellement constitué d'un circuit de quantification du temps suivi d'un système de mesure d'erreur et de contre-réaction. On peut aussi mettre en oeuvre le procédé selon l'invention grâce à un circuit analogique équivalent au circuit ci-dessus décrit. Un tel circuit analogique serait constitué par exemple d'un amplificateur opérationnel monté en filtre passe-bas ou en intégrateur pour filtrer les composantes basse-fréquence des écarts de retard de multiplexage. La fonction comparaison pourra être obtenue par un circuit de seuillage relié à l'amplificateur opérationnel pour fournir le signal 19′ commandant au multiplexeur 15 l'émission d'un bloc de données dans le multiplex. Comme décrit précédemment, un tel circuit analogique mesure le retard de multiplexage introduit par le multiplexeur 15 et le compare à une valeur de référence. Lorsqu'un tel circuit est monté en intégrateur, il cumule de bloc en bloc à chaque cycle d'émission du multiplexeur, les écarts mesurés entre les temps d'attente constatés et cette valeur de référence. Ainsi, lorsque l'intégrateur atteint une certaine limite, la sortie du circuit de seuillage force le multiplexeur 15 à émettre le bloc suivant (ou l'un des suivants) au bout d'un délai inférieur au temps de consigne donné par la valeur de référence. Ceci a pour effet de faire décroître le contenu de l'intégrateur. A l'inverse, si l'intégrateur descend en-dessous de cette limite, le circuit de seuillage force le multiplexeur à dépasser le temps de consigne. Du fait que l'intégrale des écarts mesurés est bornée le retard moyen de multiplexage est rigoureusement égal à la valeur de consigne et les composants basse-fréquence de la gigue dans le signal reconstitué demeurent faibles.

Bien entendu, le dispositif de mise en oeuvre du procédé selon l'invention est donné à titre d'exemple non limitatif et on pourra prévoir d'autres variantes sans pour cela sortir du cadre de l'invention.

## Revendications

1. Procédé pour réduire la composante basse fréquence de la gigue dans un signal de rythme reconstitué en sortie d'un système de transmission de données numérique du type comprenant à son entrée un multiplexeur d'ordre supérieur (15) recevant au moins un flot de données numérisées organisées en bloc et présentées à un rythme déterminé, ledit multiplexeur émettant chaque bloc de données dans un multiplex numérique vers la sortie du système de transmission via un canal de transmission (17) de données numérisées après un retard de multiplexage variable, caractérisé en ce que :
a) on mesure un retard de multiplexage pour l'émission en cours d'un bloc de données dans le multiplex,
b) on compare le retard de multiplexage mesuré avec une valeur de référence choisie pour déterminer un écart de retard de multiplexage et pour différer si nécessaire ladite émission en cours,
c) on répète les étapes a) et b) pour l'émission suivante d'un bloc de données dans le multiplex en prenant en compte dans l'étape b), les écarts de multiplexage déterminés pour les émissions précédentes ; ladite prise en compte des écarts de multiplexage déterminés pour les émissions précédentes consistant à cumuler successivement lesdits écarts de multiplexage et à introduire le résultat du cumul lors de la comparaison du retard de multiplexage avec ladite valeur de référence ; de manière à ce que les variations de retard de multiplexage se compensent et à ce que le retard de multiplexage moyen deviennent constant à long terme.

2. Procédé selon la revendication 1, caractérisé en ce que ladite valeur de référence de retard de multiplexage est choisie supérieure à la valeur de retard de multiplexage maximale.

3. Procédé selon les revendications 1 à 2, caractérisé en ce que le retard de multiplexage est mesuré au moyen d'un compteur (50) incrémenté par les impulsions d'un signal d'horloge.

4. Procédé selon la revendication 3, caractérisé en ce que la valeur de référence de retard de multiplexage est choisie de manière à correspondre à un nombre prédéterminé d'impulsions du signal d'horloge.

5. Procédé selon la revendication 4, caractérisé en ce que l'émission d'un bloc de données dans le multiplex est différé tant que la valeur de comptage donnée par ledit compteur n'est pas au moins égale à la valeur de référence de retard de multiplexage.

6. Procédé selon la revendication 4 ou 5 caractérisé en ce que la valeur de référence de multiplexage est atteinte lors du débordement dudit compteur.

7. Procédé selon la revendication 4 à 6, caractérisé en ce que l'écart de multiplexage est déterminé par soustraction entre la valeur de comptage du compteur au moment de l'émission du bloc de données dans le multiplex et sa valeur de comptage correspondant à la valeur de référence de retard de multiplexage.

8. Procédé selon les revendications 3 à 7, caractérisé en ce que pour cumuler les écarts de retard de multiplexage on conserve dans le compteur le résultat de la soustraction des valeurs de comptage pour l'émission en cours lors du démarrage d'incrémentation du compteur pour l'émission suivante d'un nouveau bloc de données dans le multiplex.

## Patentansprüche

1. Verfahren zum Verkleinern der Niederfrequenzkomonente des Jitters in einem Klangsignal, dessen Rhythmus am Ausgang eines Sendesystems für digitale Daten wiederhergestellt wurde, von der Art, die am Eingang einen Multiplexer höherer Ordnung (15) umfaßt, der mindestens eine Flut digitalisierter Daten empfängt, die in einem Block organisiert sind und unter einem festgelegten Rhythmus geliefert werden, wobei der Multiplexer jeden Datenblock in einem digitalen Multiplex zum Ausgang des Übertragungssystems sendet, über einen Sendekanal (17) für digitalisierte Daten, nach einer variablen Multiplexierungsverzögerung,
dadurch gekennzeichnet, daß:
a) man eine Multiplexierungsverzögerung für die laufende Sendung eines Datenblocks im Multiplex mißt,
b) man die gemessene Multiplexierungsverzögerung mit einem Referenzwert vergleicht, der ausgewählt wurde, um einen Abstand der Multiplexierungsverzögerung festzulegen und gegebenenfalls die laufende Sendung hinauszuzögern,
c) man die Schritte a) und b) für das nachfolgende Senden eines Datenblocks im Multiplex wiederholt, wobei man beim Schritt b) die Multiplexierungsabstände berücksichtigt, die für die vorausgegangenen Sendungen festgelegt wurden, wobei diese Berücksichtigung darin besteht, daß man nacheinander die Multiplexierungsabstände kumuliert und das Ergebnis der Kumulierung beim Vergleich der Multiplexierungsverzögerung mit dem Referenzwert einführt, damit die Änderungen der Multiplexierungsverzögerungen sich kompensieren und damit die durchschnittliche Multiplexierungsverzögerung langfristig konstant wird.

2. Verfahren gemäß Anspruch 1,
dadurch gekennzeichnet, daß ein Referenzwert für die Multiplexierungsverzögerung gewählt wird, der größer ist als der maximale Multiplexierungsverzögerungswert.

3. Verfahren gemäß einem der Ansprüche 1 oder 2,
dadurch gekennzeichnet, daß die Multiplexierungsverzögerung mit Hilfe eines Zählers (50) gemessen wird, der durch die Impulse eines Taktgebersignals inkrementiert wird.

4. Verfahren gemäß Anspruch 3,
dadurch gekennzeichnet, daß der Referenzwert für die Multiplexierungsverzögerung so gewählt wird, daß er einer vorher festgelegten Zahl von Impulsen des Taktgebersignals entspricht.

5. Verfahren gemäß Anspruch 4,
dadurch gekennzeichnet, daß das Senden eines Datenblocks im Multiplex so lange verzögert wird, wie der vom Zähler angegebene Zählwert nicht mindestens dem Referenzwert für die Multiplexierungsverzögerung gleich ist.

6. Verfahren gemäß den Ansprüchen 4 oder 5,
dadurch gekennzeichnet, daß der Referenzwert für das Multiplexieren dann erreicht ist, wenn der Zähler überläuft.

7. Verfahren gemäß den Ansprüchen 4 bis 6,
dadurch gekennzeichnet, daß der Multiplexierungsabstand durch Subtraktion zwischen dem Zählwert des Zählers im Augenblick des Sendens des Datenblocks im Multiplex und dem Zählwert, der dem Referenzwert für die Multiplexierungsverzögerung entspricht, gebildet wird.

8. Verfahren gemäß den Ansprüchen 3 bis 7,
dadurch gekennzeichnet, daß um die Multiplexierungsverzögerungsabstände zu kumulieren, man das Ergebnis der Subtraktion der Zählwerte für die laufende Sendung beim Starten der Zählerinkrementierung für die nachfolgende Sendung eines neuen Datenblocks im Multiplex, im Zähler behält.

## Claims

1. Process for reducing the low frequency component of the jitter in a timing signal reconstituted at the output of a digital data transmission system of the type comprising at its input a higher order multiplexer (15) receiving at least one stream of digitised data arranged in a block and presented at a certain timing, the said multiplexer emitting each block of data in a digital multiplex to the output of the transmission system via a transmission channel (17) for digitised data after a variable multiplexing delay,
characterised in that:
a) a multiplexing delay is measured for the current emission of a block of data in the multiplex,
b) the multiplexing delay measured is compared with a reference value chosen to determine a multiplexing delay interval and if necessary to defer the said current emission,
c) the steps a) and b) are repeated for the following emission of a block of data in the multiplex considering in step b) the multiplexing intervals determined for the preceding emissions; this consideration of the multiplexing intervals determined for the preceding emissions consisting of successively cumulating the said multiplexing intervals and introducing the result of the cumulation during the comparison of the multiplexing delay with the said reference value; in such a way that the multiplexing delay variations compensate each other and that the average multiplexing delay becomes fixed in the long term.

2. Process according to claim 1, characterised in that the said multiplexing delay reference value is selected to be higher than the maximum multiplexing delay value.

3. Process according to claims 1 and 2, characterised in that the multiplexing delay is measured by means of a counter (50) incremented by the pulses of a clock signal.

4. Process according to claim 3, characterised in that the multiplexing delay reference value is selected in such a way as to correspond to a predetermined number of pulses of the clock signal.

5. Process according to claim 4, characterised in that the emission of a block of data in the multiplex is deferred as long as the count value given by the said counter is not at least equal to the multiplexing delay reference value.

6. Process according to claim 4 or 5, characterised in that the multiplexing reference value is achieved when the said counter overflows.

7. Process according to claims 4 to 6, characterised in that the multiplexing interval is determined by subtraction between the count value of the counter at the moment of the emission of the block of data in the multiplex and its count value corresponding to the multiplexing delay reference value.

8. Process according to claims 3 to 7, characterised in that in order to cumulate the multiplexing delay intervals the counter retains the result of the subtraction of the count values for the current emission at the time of the start of the incrementing of the counter for the following emission of a new block of data in the multiplex.
